Europäisches Patentamt

European Patent Office

Office européen des brevets

(11) Publication number: **0 332 377**
**A2**

# (12) EUROPEAN PATENT APPLICATION

(21) Application number: **89302223.6**

(22) Date of filing: **06.03.89**

(51) Int. Cl.⁴: **A47F 5/08 , G11B 23/00**

(30) Priority: **07.03.88 JP 53405/88**
          **16.03.88 US 168919**

(43) Date of publication of application:
**13.09.89 Bulletin 89/37**

(84) Designated Contracting States:
**AT BE CH DE ES FR GB GR IT LI LU NL SE**

(71) Applicant: **ADCO ENTERPRISES, INC.**
**33920 Avenue H**
**Yucaipa California 92399(US)**

(72) Inventor: **Adams, Dudley D.**
**33920 Avenue H**
**Yucaipa California 92399(US)**

(74) Representative: **Powell, Stephen David et al**
**J.F. Williams & Co. 34 Tavistock Street**
**London WC2E 7PB(GB)**

(54) **Display racks and brackets therefor.**

(57) A display rack, e.g. for video tapes, is formed of an elongated support member (1) which is located vertically on a support surface and one or more brackets (2) which are attached to the support member, the brackets having opposed radiused corners (13) allowing for rotating of the brackets relative to the support member to lock the edges (12) of the brackets underneath lips (4) on the support member. The bracket (2,15;16) carries a tray (10) on a projection (18, Fig 6) for hanging articles.

EP 0 332 377 A2

## Display Racks and Brackets Therefor

This invention is directed to a display rack for video tapes, video tape containers and other structures which employs brackets which can be attached to a support member by twisting the bracket onto the support member.

With the increased availability of video recording devices the displaying and renting of video tapes for viewing on these devices has become a very widespread industry. Many types of commercial establishments display and rent video tapes. Because floor space is normally of a premium in commercial establishments it is important that display racks for video tapes be as compact as possible while still allowing for the display of the video tape in a manner wherein the patron of the establishment may readily view the outside of the video tape to ascertain the contents of what is on the tape.

In displaying the tape for the consumers selection, normally the tape is located in a container which includes pictorial and written information concerning the contents of the tape. It is normally this container with or without the tape inside which is displayed to the consumer.

In the past either a book shelf like display rack has been utilized which only allows for displaying of the side edge of the video tape container or a magazine type rack has been utilized which allows for a full frontal display of the front of the video tape container. While the bookshelf type rack achieves high density of tapes in a limited area, only a limited amount of the outside surface of the container is available for viewing by the viewing public to select a tape. With a magazine type display rack the full front or back surface of the container is available to the consumer; however, the number of video tapes which may be displayed on a particular display area is limited.

In United States patent 4,584,950 there is disclosed a display rack for video tapes and/or containers for video tapes which allows for increased density of the display of the video tapes while still allowing for viewing of a significant portion of the outside surface of the container of each of the video tape containers. The display rack of this patent allows for increases in the density of video tapes or video tape containers which can be displayed in a particular display area; however, in certain installations, in which the supporting channel member of the rack extends from floor to ceiling or between other similar top and bottom type structures, the number of brackets which can be attached to a channel becomes fixed once the channel is fixed to the support structure. This is because upon attaching a floor-to-ceiling-extending supporting channel member to its support structure, the floor and ceiling of the support structure interfere with access to the ends of the channel member. Once the ends of the channel member are no longer accessible, no further brackets can be added to the channel member because the brackets are attached to the channel member by sliding the brackets on one of the ends of the channel member.

In view of the above it is evident that there exists a need for display racks in which the display rack holding brackets can be attached to a support member or support channel without having to attach the brackets on the support member by sliding the brackets onto the ends of the support channel.

According to a first aspect of the present invention there is provided a display rack comprising a support member ,and a bracket member characterised in that said support member is formed as an elongated element having left and right side lips and a plurality of ridges extending along the length of the elongated element; in that said bracket member is formed with a backplate having a plurality of ridges extending along the back of the backplates and left and right side edges sized and shaped to be positionable underneath the lips on said support members, and in that diagonally opposed corners of said back plate of said bracket member are formed with radiuses thereon to allow for rotation of said backplate of said bracket underneath the lips on said support member.

An advantage of the above rack is that it can hold video tapes or other display items and the display rack brackets can be added or removed from the display rack supporting member anywhere along the length of the support member.

According to a second aspect of the present invention there is provided a bracket for a display rack and comprising a backplate having parallel left and right side edges and a top edge and bottom edge connecting said left and right side edges and joining said parallel left and right sides at top right and top left and bottom right and bottom left corners respectively, characterised in that one of said top right or top left corners and one of said bottom right or bottom left corners are rounded in shape, said one of said top corners which is rounded and said one of said bottom corners going diagonally opposed from each other on said backplate.

An advantage of the above bracket is that it can be utilized with existing support structures and can lock and hold onto these existing support members.

Preferred embodiments of the present invention will now be described, by way of example only, with reference to the accompanying drawings, of which:

Figure 1 is an isometric view of a bracket invention;

Figure 2 is an elevational view in partial section showing a first step in attachment of the bracket of Figure 1 to to a support member;

Figure 3 is a view similar to Figure 2 showing the bracket of Figure 1 in its final position as attached to the support member;

Figure 4 is a fragmentary plan view in section about the line 4-4 of Figure 3;

Figure 5 is an isometric view of a bracket in accordance with a second embodiment of the present invention; and

Figure 6 is an isometric view of a bracket in accordance with a third embodiment of the present invention.

The display rack of the invention comprises two main components, a support member and a plurality of brackets which attach to this support member. As in U.S. patent 4,584,950, the contents of which are hereby incorporated by reference, by positioning a plurality of support members in a horizontal orientation in a side by side manner on a wall, support board, post or other structure,and attaching a number of the brackets to the support members a complete rack system can be assembled on the wall etc. Each individual support member serves as a foundation for a plurality of bracket members which are spaced along the vertical height of the support member in a spaced array. A video tape or video tape container is located in between an upper and a lower bracket member and can be easily removed and reinserted onto the bracket members by a consumer as the consumer casually and leisurely sorts through a plurality of video tapes or video tape containers which are supported on the improved video tape racks of the invention.

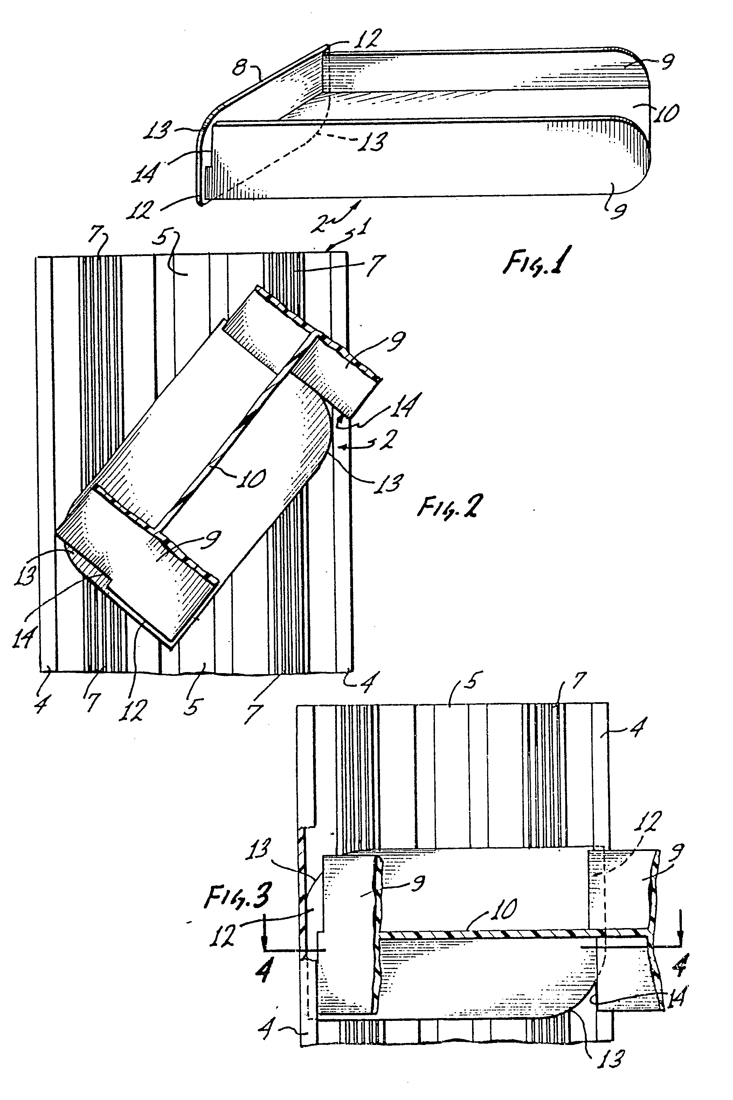

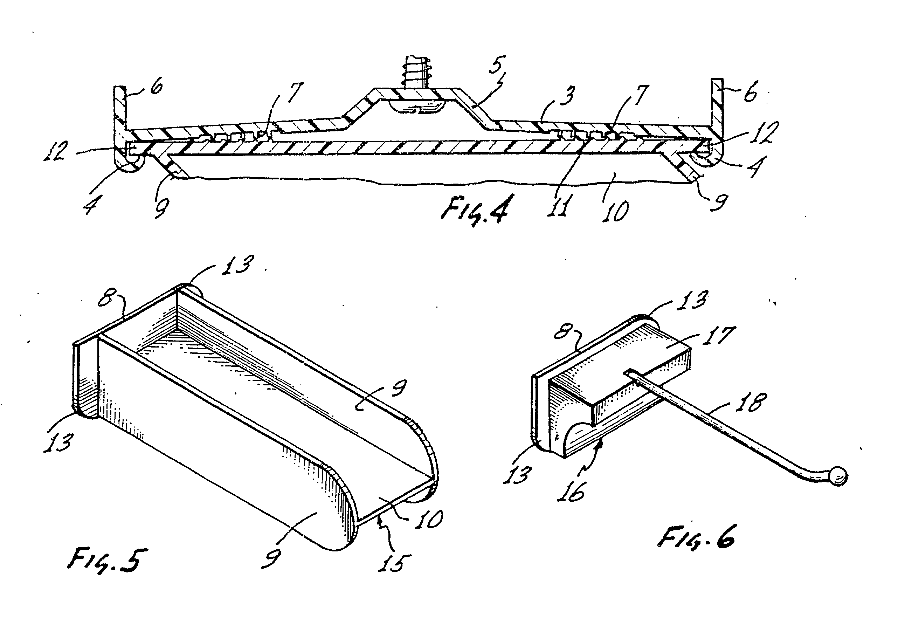

In Figures 2 and 3 the support member 1 is seen looking directly at it when mounted on a wall, a post or other vertical surface and in Figure 4 it is shown in a plan view in section. The support member 1 has a backplate 3 having a lip 4 on either end. The lips 4 curl forward from the backplate 3 to form opposing channels or grooves. Located in the centre of the backplate 3 of the support plate 1 is a mounting channel 5.

The channel 5 is sized and shaped such that a screw or other attaching means can be driven through the back of the channel 5 and into a support surface, e.g. a wall, post or the like, to provide for attachment of the support member 1 to the wall etc. Since the channel 5 is recessed with respect to the plane of the backplate 3 the head of the screw or other fastener can be recessed within the channel 5 and not interfere with attachment to the brackets 2 onto the support member 1.

Flanges 6 extend along the back edges of the backplate 3. The flanges 6 are of a depth of about the same depth as the channel 5 such that when the support member 1 is attached to a surface, it is supported in its centre by the back of the channel 5 and along its edges by the flanges 6.

A plurality of ridges 7 are formed on the left and right sides of the front of the backplate 3. These ridges form an interference fit with similar ridges on the bracket 2 holding the bracket 2 against vertical movement on the support member 1.

As is evident from viewing Figure 4 the support member 1 can easily be formed utilizing extrusion or other moulding techniques. If formed as an extrusion it can be formed as a continuous extrusion and cut off into proper lengths. As can be seen in Figures 2 and 3 the support member 1 is attached to a vertical surface as a long strip. The strips can extend from floor to ceiling when mounted on a wall or that can be shorter if mounted on a post or other support surface. In any event the length of the support member 1 can be chosen such that it can custom fit the entire height of a wall, post or other surface on which the support member is attached.

A bracket member 2 is shown alone in Figure 1, being attached to the support member 1 in Figure 2, and as attached to the support member in Figures 3 and 4. The bracket 2 is formed of a backplate 8 which has left and right side flanges 9 which extend from the backplate 8. A web 10 intersects with and is integrally formed with the flanges 9 on the bracket 2. As so formed a portion of each of the flanges 9 extends above and below the web 10. Those portions of the flanges extending above the web 10 serve to hold an upper video tape container on top of the bracket 2 and those portions of the flanges 9 extending below the web 10 serve to hold and position a video tape container on an identical bracket which is positioned below the identified bracket along the length of a support member 1.

The bracket 2 of Figures 1 to 4 is constructed such that the flanges 9 and the web 10 intersect or project from the backplate 8 at an angle of, for example, forty-five degrees. The allows for displaying a greater area of the front or back surface of a video tape container to expose more of the front and back surface of the video tape container to the consumer.

A plurality of ridges are formed on the left and right sides of the backplate 8 of the bracket 2 as is evident in Figure 4. The spacing of the ridges 11 on the backplate 8 of the bracket 2 is slightly offset with respect to the spacing of the ridges 7 on the support member 1 such that there will always be an interference fit between some of the ridges on the support member 1.

The width of the backplate 8 on the bracket 2 is chosen such that it fits across the width of the support member 1 underneath the lips 4 on the edges of the support member 1. The flanges 9 are formed on the backplate 8 of the bracket 21 such that an edge 12 is formed outwardly from each of the flanges 9 on the backplate 8. It is this edge 12 which is positionable underneath the lips 4 (in the channel or groove formed by the lips) of the support member 1 to hold the bracket 2 to the support member 1.

The backplate 8 of the bracket 2 is radiused i.e. rounded, on opposite corners. This is evident in Figures 1,2 and 3 where it can be seen that the upper left hand and lower right hand corners of the brackets 2 are moulded to have a radius 13 thereon. The areas of the flanges 9 immediately adjacent these areas 13 are cut away to form notches 14.

Once the support member 1 is attached to a wall, post or other surface the brackets 2 are easily attached to the support member 1 by positioning the bracket on the support member at an angle as is seen in Figure 2. This locates the radius areas 13 on the backplate 8 of the bracket 2 adjacent to the lips 4 on the support plate 1. The bracket 2 in then rotated or twisted clockwise to the position seen in Figure 3. This position the edges 12 on the backplate 8 on the bracket 2 underneath the lips 4 of the support member locking the bracket 2 to the support member 1. The ridges 11 on the backplate 8 of the bracket 2 interlock with the ridges 7 on the front of the backplate 3 of the support member to firmly and fixedly hold the bracket 2 to the support member 1. The interlocking of these ridges can best be seen Figure 4.

The radiusing at 13 of the backplate 8 of the bracket 2 allows for twisting of the bracket 2 from the position seen in Figure 2 to the position seen in Figure 3 to mount the bracket 2 to the support member. The bracket 2 can be easily removed from the support member 1 by simply rotating it counterclockwise, that is from the position seen Figure 3 to the position seen Figure 2.

The bracket 2 is posititioned generally in the desired position along the support member 1 in an orientation seen in Figure 2 and then rotated to the oreintation seen in Figure 3. The bracket once locked onto the support member 1 as seen in Figure 3 can be slid upwardly and downwardly again at the friction fit of the ridges 11 against the ridges 7 by applying pressure to the bracket 2 to slide it along the support member 1. Normally the bracket 2 would generally be positioned on the support member 1 and then rotated from Figure 2 to Figure 3 to lock it and then a fine adjustment would be made by sliding the bracket a small distance along the support member 1.

In Figure 5 an alternative bracket 15 is illustrated. This bracket 15 differs from the bracket 2 only in the orientation of its flanges 9 and web 10 with respect to its backplate 8. Instead of being located at an acute angle as in the bracket 2, the flanges 9 and web 10 of the bracket 15 are located at a 90 degree angle with respect to the backplate 8. The backplate 8, however, is sized and shaped exactly as the backplate 3 of the bracket 2. Since the flanges 9 of the bracket 15 are not orientated at an acute angle with respect to the backplate 8 the edges 12 are located further out from the flanges 9 and as such the notches 14 of the bracket 2 can be omitted from the bracket 15.

Further shown on the bracket 15 is the positioning of the radius 13 on the lower left hand corner and the upper right hand corner. Thus, for illustrative purposes, in attaching the bracket 15 to a support member 1, the bracket 15 would be rotated counterclockwise to lock it on the support member and rotated clockwise to remove it from the support member. A further bracket 16 is shown in Figure 6. It also includes a base plate 8 having radiuses 13 as in the prior brackets. It is mounted to a support member 1 in exactly the same manner as the brackets 2 and 15. Positioned on the base plate 8 of the bracket 16 is a base 17 which supports a projection 18.

The bracket 16 is utilized in exactly the same manner as the prior brackets except it can utilized to display other articles by hanging them on the projections 18.

**Claims**

1. A display rack comprising a support member (1) and a bracket member (2, 15,16) characterised in that said support member is formed as an elongated element having left right side lips (4) and a plurality of ridges (7) extending along the length of the elongated element; in that said bracket member is formed with a backplate (8) having a plurality of ridges (11) extending along the back of the backplate and left and right side edges (12) sized and shaped to be positionable underneath the lips on said support members; and in that diagonally opposed corners of said back plate of said bracket member are formed with radiuses (13) thereon to allow for rotation of said backplate of said bracket underneath the lips on said support member.

2. A display rack as claimed in claim 1 wherein said ridges (7) are formed in two groups on said support member, a first of said groups extending on the left hand side of said support member along the elongated dimension of said support member and the second of said groups extending on the right side of said support member along the elongated dimension of said support member; and said ridges (11) on said bracket member are formed in two groups with the first of said groups extending along the backplate of said bracket member on the right side of said backplate of said bracket member and the second of said groups extending along the backplate of said bracket member along the left hand side of said bracket member, said two groups of said ridges on said support member and said two groups of said ridges on said bracket member being positioned so as to interact with one another when said bracket member is located on said support member.

3. A display rack as claimed in claim 1 or 2, wherein said bracket member includes left and right side flanges (9) and a web (10) extending between said flanges.

4. A display rack as claimed in any preceding claim, wherein said bracket member (16) includes a support base (17) and a projection member (18) extending from said support base.

5. A display rack as claimed in any preceding claim wherein said lips (4) on said support member form inwardly directed channels and said edges (12) on the backplate(8) of said bracket member fit into said channels.

6. A bracket member (2,15,16) for a display rack and comprising a backplate (8) having parallel left and right side edges, and a top edge and a bottom edge connecting said left and right side edges and joining said parallel left and right sides at top right and top left and bottom right and botton left corners respectively, characterissed in that one of said top right or top left corners and one of said bottom right or bottom left corners are rounded (13) in shape, said one of said top corners which is rounded and said one of said bottom corners being diagonally opposed fron each other on said backplate.

7. A bracket member as claimed in claim 6 wherein the other corners are each formed as essentially 90 degree angles.

8. A bracket member as claimed in claim 6 or 7 wherein said bracket member includes left and right side flanges (9) and a web (10) extending between said flanges.

9. A bracket member as claimed in claim 8, wherein said flanges and said web extend at an acute angle from said the backplate of said bracket member and said flanges are spaced away from said backplate (8) adjacent said rounded corners (13) to form notches (14).

10. A bracket member as claimed in claim 6 wherein said bracket member (16) includes a support base and a projection member extending from said support base.

Fig.1

Fig.2

Fig.3

Fig. 4

Fig. 5

Fig. 6